# EUROPEAN PATENT APPLICATION

(11) **EP 3 144 527 A1**
(43) Date of publication of application: **22.03.2017**
(21) Application number: 16468002.7
(22) Date of filing: 14.09.2016
(51) Int. Cl.: F03D 3/00, F03D 3/06

(54) **TURBINE WITH MOVABLE TARPAULINS**

(30) Priority: 17.09.2015 SI 201500219
(71) Applicant: Opravs, Jakob, 1242 Stahovica (SI)
(72) Inventor: Opravs, Jakob, 1242 Stahovica (SI)

(57) **Abstract**

Turbine with movable tarpaulins changes the movement of gases or fluids in rotation. Turbine has on three or more equally spaced supporting frames installed tarpaulins made of fabric or foil, which can freely move in angle 180° and with that from one side enable the flow of gas or liquid while from the other side create resistance. Turbine would be used primarily for exploitation of wind energy or energy of water and sea streams. With such a turbine we would for the same resistance surface spend less material, than for blades made of solid material. In use of the tarpaulins itself it is not necessary to use the moving parts that need lubrication.

## Description

Object of invention is a turbine, which uses the movement of gases or fluids and changes it in rotation. Instead of blades it has movable tarpaulins, which moves themselves away from one side in the direction of flow and from the other side place themselves perpendicularly on the direction of flow which leads to resistance and consequently rotation of the turbine. The turbine can be placed vertically or horizontally. If it is placed vertically then the rotation is independent from the movement of gases and fluids.

The use of turbine is possible on multiple areas, mostly for using the energy of wind, for powering wind power stations, wind pumps and similarly. The turbine can be also used under water, submerged in the river for using the energy of water flows or in the sea for using the energy of sea flows.

Technical problem which the invention solves is to assure the most simple and with this the cheapest construction of a turbine, which also allows larger surface for resistance of the moving gases or fluids. The same surface of movable tarpaulins is cheaper than rotor blades that are made from hard material. Also because of softer material they cause less noise when hitting against each other. Because only the tarpaulins are used here, there are no moving parts, which need lubrication.

Principle of movable rotor blades on the area of wind turbines is known for a very long time. But at all the versions I know rotor blades are made from a hard compact material.

The invention is better described based on enclosed drawings:

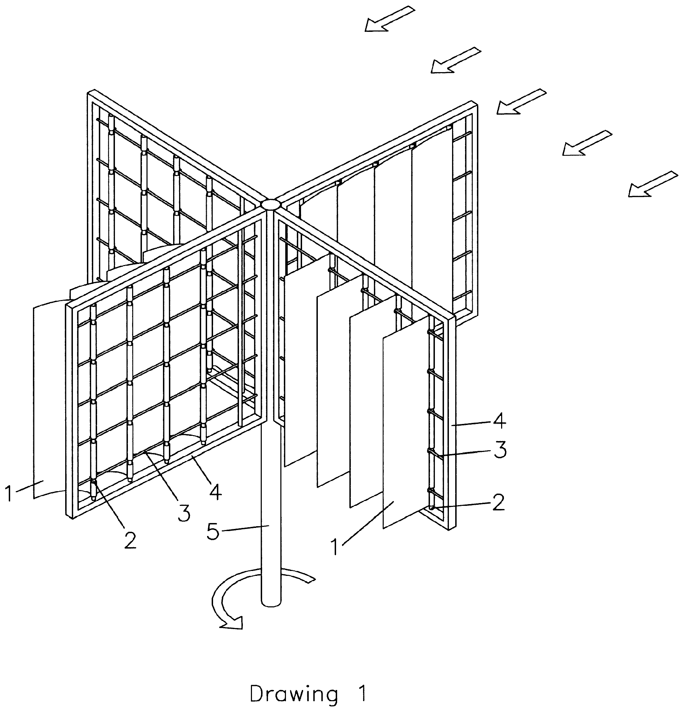

- drawing 1: The specified turbine in axonometric projection

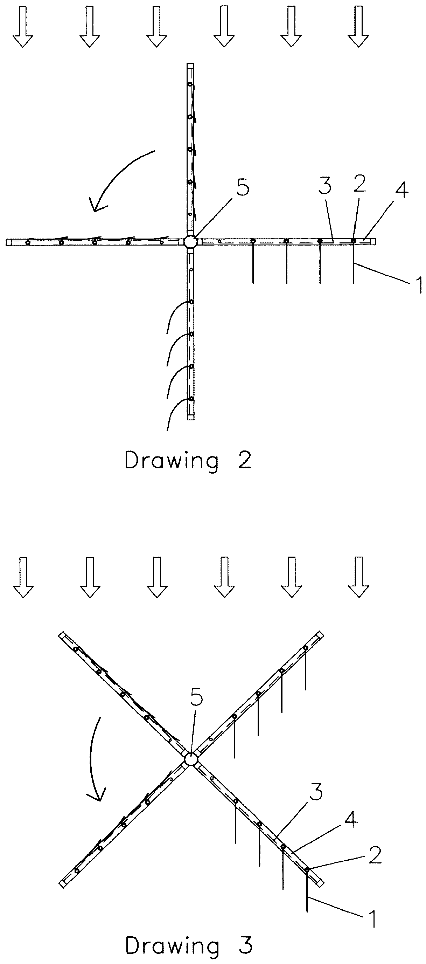

- drawing 2: Ground plan of turbine - presentation of tarpaulin's position when frames are positioned perpendicularly and in a line to the direction of the flow.
- drawing 3: Ground plan - presentation of tarpaulin's position when frames are at an angel of 45° according to the direction of flow.

Turbine consists from support column (5) which can be used for powering generator, pump or other suitable drives and consumers. On support column (5) there are attached three or more support frames (4). All the frames (4) are the same size and are evenly distributed according to the support column so that the angle between two frames is always the same according to the axis. Each frame has vertical pillars (2) installed, on which there are from one side attached tarpaulins (1), which in the horizontal direction can be freely tilted in angle ca 180°. Bigger angle of movement to tarpaulins (1) prevent crosspieces (3) which are horizontally or obliquely installed at vertical pillars (2) so that they stop tarpaulin when it is in a parallel position with frame (4) and with this allow resistance to gas or fluid movement force and with this consequentially create rotation of the turbine.

Vertical pillars (2) and crosspieces (3) can be made from sticks from any appropriate material. They can even be made from wire or rope. Crosspieces (3) can be clamped horizontally or obliquely. They can be replaced by net from wires or ropes.

Tarpaulins (1) should be made from thin flexible material, such as, for example any fabric or any foil.

Arrows in the drawings show the direction of wind movement and the direction of turbine rotation. If the turbine is made mirror from the one that is shown in pictures the direction of rotation is reversed which does not affect its functionality.

## Claims

1. A turbine, **characterized in that** it has on supporting frames (4) fitted tarpaulins (1) made from fabric or foil, which can freely move in angle 180° and with that from one side enable the flow of gas or fluid while from the other side create resistance and consequentially rotation.
